# EUROPEAN PATENT APPLICATION

(11) **EP 4 290 676 A1**
(43) Date of publication of application: **13.12.2023**
(21) Application number: 22881171.7
(22) Date of filing: 19.07.2022
(51) Int. Cl.: H01M 50/55, H01M 50/179, H01M 50/538, H01M 50/188, H01M 50/593, H01M 50/342, H01M 50/249, H01M 10/04

(54) **BATTERY MANUFACTURING METHOD**

(30) Priority: 15.10.2021 KR 20210137856; 13.12.2021 KR 20210177741; 31.12.2021 KR 20210194593
(71) Applicant: LG Energy Solution, Ltd., Seoul 07335 (KR)
(72) Inventor: HWANGBO, Kwang-Su, Daejeon 34122 (KR); KIM, Do-Gyun, Daejeon 34122 (KR); MIN, Geon-Woo, Daejeon 34122 (KR); LIM, Hae-Jin, Daejeon 34122 (KR); JO, Min-Ki, Daejeon 34122 (KR); CHOI, Su-Ji, Daejeon 34122 (KR); KANG, Bo-Hyun, Daejeon 34122 (KR)
(74) Representative: Goddar, Heinz J.
(86) International application number: PCT/KR2022/010560
(87) International publication number: WO 2023/063540

(57) **Abstract**

A method of manufacturing a battery according to the present disclosure includes (a) preparing a battery housing having an opening at one side and a bottom having a through-hole at the other side; (b) fixing an electrode terminal to the through-hole; (c) preparing an electrode assembly including a first electrode tab formed of a first uncoated portion and a second electrode tab formed of a second uncoated portion at upper and lower parts, respectively; (d) inserting the electrode assembly into the battery housing through the opening at one side of the battery housing such that the first electrode tab faces the bottom; (e) electrically connecting the first electrode tab to the electrode terminal; and (f) covering the opening end with a cap plate.

## Description

### TECHNICAL FIELD

The present disclosure relates to a method of manufacturing a battery, and more particularly, to a method of manufacturing a battery having a structure in which both a positive terminal and a negative terminal are arranged adjacent to each other on one side of the cylindrical battery without greatly changing the existing cylindrical battery structure.

The present application claims priority to Korean Patent Application No. 10-2021-0137856 filed in the Republic of Korea on October 15, 2021, Korean Patent Application No. 10-2021-0177741 filed in the Republic of Korea on December 13, 2021, and Korean Patent Application No. 10-2021-0194593 filed in the Republic of Korea on December 31, 2021, the disclosures of which are incorporated herein by reference.

### BACKGROUND ART

When manufacturing a battery pack using a cylindrical battery, in general, a plurality of cylindrical batteries is placed upright in a housing and electrically connected to each other using the top and bottom of the cylindrical battery as positive and negative terminals, respectively.

When the positive and negative terminals of the cylindrical battery are disposed on the opposite sides, an electrical connection component such as a busbar used to electrically connect the plurality of cylindrical batteries needs to be applied to both the top and bottom of the cylindrical battery. This leads to a complicated electrical connection structure of the battery pack.

In addition, since the existing cylindrical battery structure needs to individually apply the components for insulation and the components for waterproof or sealability on the upper and lower parts of the battery pack, it results in the increased number of applied components and the complicated structure.

Accordingly, to simplify the electrical connection structure of the plurality of cylindrical batteries, it is necessary to develop the cylindrical batteries having the positive and negative terminals in the same direction.

In addition, while constituting the cylindrical battery to have the positive and negative terminals at one end in the axial direction, the cylindrical battery may have a complicated internal structure, which results in the increased manufacturing cost and the limited energy density.

Additionally, in the cylindrical battery having the positive and negative terminals at one end in the axial direction, it is necessary to ensure the optimum area of each of the positive terminal and the negative terminal in a straightforward manner.

Additionally, in the cylindrical battery having the positive and negative terminals at one end in the axial direction, the two terminals need to provide a surface that is easy for the electrical connection component to connect to them.

Meanwhile, when manufacturing the battery pack including cylindrical batteries arranged upright, each having first and second electrode terminals at one end and the other end in the axial direction, respectively, an insulation between the bottom surface of the cylindrical batteries that acts as the terminal and the bottom of the pack housing is essentially necessary, which is another factor that increases the manufacturing cost.

### DISCLOSURE

### Technical Problem

The present disclosure is designed to address the above-described problem, and therefore the present disclosure is directed to proving a cylindrical battery having a structure in which positive and negative terminals are applied in the same direction.

The present disclosure is directed to ensuring a sufficient area for welding of an electrical connection component such as a busbar used to manufacture a battery pack and an electrode terminal of a cylindrical battery when electrically connecting a plurality of cylindrical batteries in the same direction.

The present disclosure is directed to providing a cylindrical battery including both positive and negative terminals on the bottom of a battery housing that may be manufactured first, irrespective of whether an electrode assembly is inserted or not, in the battery housing having an opening end and the bottom.

The present disclosure is directed to providing a cylindrical battery having positive and negative terminals having the optimal area on the bottom of the battery housing that may be manufactured first, irrespective of whether the electrode assembly is inserted or not, and a surface that is easy for the electrical connection component to connect to them.

The present disclosure is directed to providing a structure in which the positive and negative terminals are exposed on one side of the cylindrical battery but not exposed on the other side of the cylindrical battery.

The present disclosure is directed to providing a cylindrical battery in which the electrode assembly may be placed in close contact with the bottom having the two terminals, thereby increasing the energy density.

The objectives of the present disclosure are not limited to the above-mentioned objectives, and these and other objectives and advantages of the present disclosure may be understood by the following description, and will be understood more clearly by an embodiment of the present disclosure. Additionally, it is apparent that the objectives and advantages of the present disclosure may be realized by the means set forth in the appended claims and a combination thereof.

### Technical Solution

To solve the above-described problem, a cylindrical battery of the present disclosure has two electrode terminals on a bottom of a cylindrical battery housing having an opening at one side and the bottom at the other side.

The bottom of the battery housing may be processed before inserting an electrode assembly that is received in the battery housing. That is, two electrode terminals that will be placed on the bottom has a high degree of freedom of processing.

Accordingly, it is possible to make the bottom flat by a straightforward process, and when an outer surface of the bottom acts as a first electrode terminal, it is easy to perform an electrical wiring operation with an electrical connection component for connection.

Moreover, when a through-hole is formed in the bottom and an electrode terminal used as a second electrode terminal is fixed and installed in the through-hole, two electrodes may be placed on the bottom of the battery housing.

Since the electrode terminal can be also processed before inserting the electrode assembly, it is possible to make the electrode terminal flat by a straightforward process, and it is easy to perform an electrical wiring operation with an electrical connection component for connection.

A part of the electrode terminal exposed more outwards than the bottom may be extended more outwards in the radial direction than the inner circumferential surface of the through-hole. Additionally, the part of the electrode terminal extended more outwards in the radial direction than the through-hole may be processed first when preparing the electrode terminal itself.

Accordingly, the size of the part of the electrode terminal extended more outwards in the radial direction than the through-hole may be precisely determined in a straightforward manner. Additionally, in the mass production of the cylindrical battery, it is possible to minimize a difference between products in the area of the two electrode terminals on the bottom of the battery housing in a straightforward manner.

In the present disclosure, when the two electrode terminals are already positioned on the bottom of the battery housing, the electrode assembly may be inserted into the battery housing. Accordingly, the electrode assembly may be received as close to the bottom of the battery housing as possible or in close contact with the bottom of the battery housing.

The present disclosure may simply form an electrical connection structure between the electrode assembly and the two electrode terminals on the bottom of the battery housing having the two electrode terminals. This structure may increase the energy density in the battery housing.

The battery of the present disclosure has the two electrode terminals on the bottom of the cylindrical battery housing, making it possible to close the opening end of the cylindrical battery housing in a straightforward manner.

The opening end of the battery housing may be closed by a cap plate, and the cap plate may be polar or non-polar.

Specifically, a cylindrical battery of an embodiment according to the present disclosure may include a cylindrical battery housing having an opening at one side and a bottom at the other side; an electrode assembly received in the battery housing and including a first electrode tab and a second electrode tab; an electrode terminal fixed to the bottom of the battery housing through a through-hole in the bottom of the battery housing; and a cap plate that covers the opening at the one side of the battery housing.

Additionally, a cylindrical battery of another embodiment according to the present disclosure may include a cylindrical battery housing having an opening at one side and a bottom at the other side; an electrode terminal fixed to the bottom of the battery housing through a through-hole in the bottom of the battery housing; an electrode assembly including a first electrode tab and a second electrode tab and received in the battery housing through the opening side of the battery housing such that the first electrode tab faces the bottom of the battery housing and the electrode terminal; and a cap plate that covers the opening at the one side of the battery housing when the electrode assembly is received in the battery housing.

The cap plate may not be electrically connected to the first electrode tab and the second electrode tab.

The first electrode tab may be electrically connected to the electrode terminal, and the second electrode tab may be electrically connected to the battery housing.

Here, a sidewall and the bottom of the battery housing may be combined into one component.

In an example, the sidewall and the bottom may be integrally formed by a drawing process using a metal sheet press.

The first electrode tab may face the bottom, and the first electrode tab may be electrically connected to the electrode terminal.

An insulator may be interposed between the first electrode tab and the bottom.

The insulator may not be interposed between a part of the electrode terminal received in the battery housing and the first electrode tab.

The insulator may have a through-hole, and an inner circumferential surface of the through-hole may surround the electrode terminal.

The part of the electrode terminal received in the battery housing may face the insulator in the radial direction and may not face the insulator in the axial direction.

An outer diameter of the electrode terminal exposed outwards through the bottom may be larger than an inner diameter of the through-hole in the bottom of the battery housing.

A cross section of the through-hole in the bottom of the battery housing may be included in a cross section of the electrode terminal exposed outwards through the bottom.

The part of the electrode terminal exposed outwards through the bottom may cover at least part of the bottom of the battery housing in the axial direction.

The electrode terminal may include a terminal exposure portion that extends outward of the battery housing; and a terminal insertion portion that passes through an upper surface of the battery housing.

The cylindrical battery may further include an insulation gasket between the through-hole of the battery housing and the electrode terminal to insulate the electrode terminal from the battery housing.

The insulation gasket may include a gasket exposure portion that extends outward of the battery housing; and a gasket insertion portion that passes through the bottom of the battery housing.

The electrode terminal may be riveted to an inner surface of the bottom of the battery housing.

The cylindrical battery may further include a first current collector plate having one surface coupled to the first electrode tab and the other surface coupled the electrode terminal.

The cylindrical battery may further include the insulator between the first current collector plate and the battery housing.

The electrode terminal may be coupled to the first current collector plate through the insulator.

At least one of the first electrode tab and the second electrode tab may be bent toward a winding center of the electrode assembly.

The cap plate may include a venting portion that rupture to discharge gas into the atmosphere when the internal pressure of the battery housing rises above a predetermined level.

A battery pack according to an embodiment of the present disclosure includes a plurality of batteries according to an embodiment of the present disclosure and a pack housing accommodating the plurality of batteries.

A vehicle according to an embodiment of the present disclosure includes the battery pack according to an embodiment of the present disclosure.

To achieve the above-described technical objective, a method of manufacturing a battery according to the present disclosure may include a) preparing a battery housing having an opening at one side and a bottom having a through-hole at the other side; (b) fixing an electrode terminal to the through-hole; (c) preparing an electrode assembly including a first electrode tab formed of a first uncoated portion and a second electrode tab formed of a second uncoated portion at upper and lower parts, respectively; (d) inserting the electrode assembly into the battery housing through the opening at the one side of the battery housing such that the first electrode tab faces the bottom; (e) electrically connecting the first electrode tab to the electrode terminal; and (f) covering the opening with a cap plate.

The electrode terminal may include a terminal insertion portion inserted into the battery housing through the through-hole. Additionally, the step (b) may include (b 1) placing an insulation gasket between the electrode terminal and the through-hole; and (b2) performing plastic working on an end edge of the terminal insertion portion in a radial direction such that a diameter of the edge is larger than a diameter of the through-hole.

The step (b2) may include applying pressure to the end edge along an axial direction of the electrode assembly using a jig having a structure that conforms to a final shape of the plastic working.

The step (b2) may include causing the plastically-worked end edge to compress the insulation gasket onto an inner surface of the bottom of the battery housing.

The step (c) may include preparing a first electrode having the first uncoated portion at a long side end and a second electrode having the second uncoated portion at the long side end; forming a plurality of cutout grooves in the first uncoated portion and the second uncoated portion along a winding direction of the electrode assembly to split the first uncoated portion and the second uncoated portion into a plurality of sections; disposing the first electrode and the second electrode such that the first uncoated portion is opposite to the second uncoated portion in the axial direction and winding the first electrode and the second electrode with a separator interposed therebetween around an axis to form the electrode assembly in which a core and a circumferential surface are defined; and bending the first uncoated portion and the second uncoated portion along a radial direction of the electrode assembly to form a bent surface region having a structure in which the uncoated portion is stacked in multiple layers along the axial direction.

The step (c) may include coupling a first current collector plate to the bent surface region of the first uncoated portion, and the step (e) may include coupling the electrode terminal to the first current collector plate to electrically connect the electrode terminal to the first electrode tab.

The step (e) may include welding the electrode terminal to the first current collector plate using a hollow at a core of the electrode assembly.

The step (e) may include irradiating a welding laser toward a welding area of the first current collector plate facing the electrode terminal through the hollow at the core of the electrode assembly.

The method of manufacturing a battery according to the present disclosure may further include placing an insulator between the first current collector plate and an inner surface of the bottom of the battery housing.

The method of manufacturing a battery according to the present disclosure may further include, before the step (d), preparing the insulator having a through-hole at a center and a shape corresponding to the inner surface of the bottom of the battery housing; and installing the insulator on the inner surface of the bottom of the battery housing such that the through-hole of the insulator surrounds a fixed part of the electrode terminal.

The method of manufacturing a battery according to the present disclosure may further include, before the step (d), preparing the insulator having a through-hole at a center and a shape corresponding to the inner surface of the bottom of the battery housing; and fixing the insulator onto the first current collector plate such that the through-hole of the insulator is disposed on the core of the electrode assembly.

The method of manufacturing a battery according to the present disclosure may further include coupling a second current collector plate to the second electrode tab of the electrode assembly; and coupling at least part of the second current collector plate to an inner surface of the battery housing.

The method of manufacturing a battery according to the present disclosure may further include pressing an outer circumferential surface of the opening end of the battery housing inward of the battery housing to form a beading portion; welding at least part of the second current collector plate to the second electrode tab; and bringing a predetermined area of an edge of the second current collector plate into contact with an inner surface of the beading portion.

The method of manufacturing a battery according to the present disclosure may further include bending an edge area of the second current collector plate adjacent to the predetermined area such that the predetermined area reaches the inner surface of the beading portion.

The method of manufacturing a battery according to the present disclosure may further include welding the predetermined area to the inner surface of the beading portion.

The method of manufacturing a battery according to the present disclosure may further include placing a sealing gasket between an edge of the cap plate and the opening end of the battery housing; and bending the opening end of the battery housing in a centripetal direction to form a crimping portion to fix the edge of the cap plate to the opening end together with the sealing gasket.

The crimping portion may compress the sealing gasket to bring the predetermined area and the inner surface of the beading portion into close contact with each other.

The method of manufacturing a battery according to the present disclosure may further include forming a venting groove in at least one of two surfaces of the cap plate.

The method of manufacturing a battery according to the present disclosure may further include, before the step (f), placing the battery housing upright such that the bottom of the battery housing faces a ground; and injecting an electrolyte into the battery housing.

The method of manufacturing a battery according to the present disclosure may further include, after the step (f), placing the battery housing upright such that the bottom of the battery housing faces upward; and performing electrical wiring using an area except an exposed area of the electrode terminal through an outer surface of the bottom of the battery housing and the electrode terminal.

### Advantageous Effects

According to an aspect of the present disclosure, it is possible to provide the cylindrical battery having a structure in which the positive and negative terminals are in the same direction, thereby simplifying the electrical connection structure of the plurality of cylindrical batteries.

According to another aspect of the present disclosure, it is possible to provide a sufficient area for the welding of the electrode terminal of the cylindrical battery to the electrical connection component such as the busbar, thereby ensuring a sufficient bond strength between the electrode terminal and the electrical connection component, and reducing the resistance at the joined part between the electrical connection component and the electrode terminal to a desirable level.

According to another aspect of the present disclosure, the electrode terminal and the electrode assembly may be placed in close contact with each other in the battery housing, thereby increasing the amount of stored energy per volume, i.e., the energy density.

According to another aspect of the present disclosure, the positive and negative terminals are exposed on one side of the cylindrical battery, but not exposed on the other side surface, thereby providing an insulation design advantage.

According to another aspect of the present disclosure, since the positive and negative terminals are positioned on the bottom of the battery housing that may be manufactured first before inserting the electrode assembly, it is possible to easily make the sealing and insulation structure, and since the electrode assembly is received in close contact with the bottom, it is possible to increase the battery capacity density per volume, and by minimizing the errors in the manufacture and assembly of the positive and negative terminals, the subsequent process of connecting the produced batteries with the busbar may be easily conducted.

According to another aspect of the present disclosure, it is possible to provide a structure in which the outer circumferential surface of the positive electrode extends more outward than the inner circumferential surface of the through-hole on the bottom of the battery housing that is manufactured first irrespective of whether the electrode assembly is inserted, thereby arbitrarily designing the exposed area of the positive and negative terminals.

These and other effects of the present disclosure will be described together with the detailed description of the embodiments of the present disclosure.

### DESCRIPTION OF DRAWINGS

The accompanying drawings illustrate an exemplary embodiment of the present disclosure, and together with the following detailed description, serve to provide a further understanding of the technical aspects of the present disclosure, and thus the present disclosure should not be construed as being limited to the drawings.
FIG. 1 is a diagram showing an appearance of a cylindrical battery according to an embodiment of the present disclosure.
FIG. 2 is a cross-sectional view showing the internal structure of a cylindrical battery according to an embodiment of the present disclosure.
FIGS. 3 and 4 are partial cross-sectional views showing an upper part structure of a cylindrical battery according to an embodiment of the present disclosure.
FIGS. 5 and 6 are diagrams showing a coupled structure between a first current collector plate applied to the present disclosure and an electrode assembly.
FIG. 7 is a partial cross-sectional view showing a lower part structure of a cylindrical battery according to an embodiment of the present disclosure.
FIG. 8 is a diagram showing a lower surface of a cylindrical battery according to an embodiment of the present disclosure.
FIG. 9 is a diagram showing a second current collector plate applied to the present disclosure.
FIG. 10 is a schematic diagram showing a battery pack according to an embodiment of the present disclosure.
FIG. 11 is a schematic diagram showing a vehicle according to an embodiment of the present disclosure.

### BEST MODE

The above-described objectives, features and advantages will be described in detail with reference to the accompanying drawings, and accordingly, those skilled in the art will easily practice the technical aspect of the present disclosure. In describing the present disclosure, when it is determined that a certain detailed description of relevant known technology may make the subject matter of the present disclosure unnecessarily obscure, the detailed description is omitted. Hereinafter, an exemplary embodiment according to the present disclosure will be described in detail with reference to the accompanying drawings. In the drawings, identical reference numerals are used to indicate identical or similar elements.

The terms "first", "second" and the like are used to describe various elements, and these elements are not limited by the terms. These terms are used to distinguish one element from another, and unless the context clearly indicates otherwise, a first element may be a second element.

In the specification, unless the context clearly indicates otherwise, each element may be singular or plural.

Hereinafter, it will be understood that an element is referred to as being "above (or under)" or "on (or below)" another, it can be on an upper surface (or a lower surface) of the other element and intervening elements may be present between the element and the other element on (or below) the element.

Additionally, it will be further understood that when an element is referred to as being "connected to", "coupled to" or "joined to" another element, it can be directly connected or joined to the other element, or intervening elements may be present, or each element may be "connected to", "coupled to" or "joined to" each other through another element.

As used herein, the singular forms include the plural forms as well unless the context clearly indicates otherwise. It should be interpreted that the terms "comprises" or "comprising", when used in this specification, specifies the presence of stated elements or steps, but does not preclude the presence or addition of one or more other elements or steps.

Additionally, the singular forms as used herein include the plural forms as well unless the context clearly indicates otherwise. It should be interpreted that the terms "comprises" or "comprising", when used in this specification, specifies the presence of stated elements or steps, but does not preclude the presence or addition of one or more other elements or steps.

In the specification, unless the context clearly indicates otherwise, "A and/or B" represents either A or B or both, and "C to D" represents C or more and D or less.

For convenience of description, in the specification, a direction that follows a lengthwise direction of a winding axis of an electrode assembly wound in a jelly-roll shape is referred to as an axial direction Z. Additionally, a direction around the winding axis is referred to as a circumferential direction. Additionally, a direction that faces toward or faces away from the winding axis is referred to as a radial direction (X, Y). In particular, the direction that faces toward the winding axis is referred to as a centripetal direction, and the direction that faces away from the winding axis is referred to as a centrifugal direction.

The axial direction Z may correspond to a widthwise direction of an electrode before winding. The circumferential direction may correspond to a lengthwise direction of the electrode before winding. Additionally the radial direction X, Y may correspond to a normal direction of the electrode before winding.

Hereinafter, an exemplary embodiment of the present disclosure will be described with reference to the accompanying drawings.

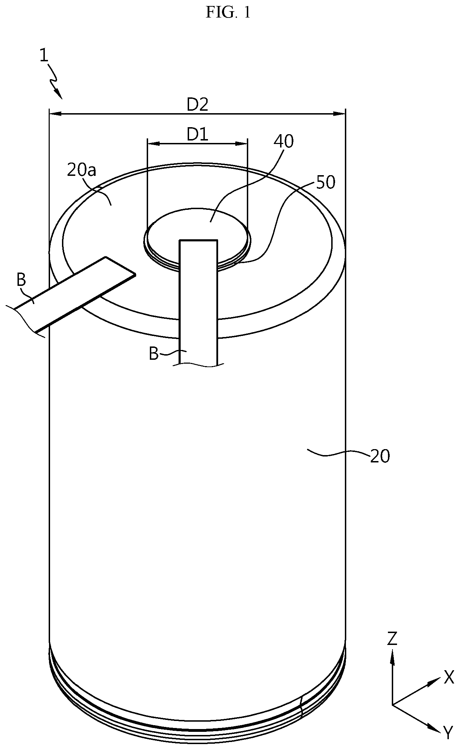

Referring to FIGS. 1 to 4, a cylindrical battery 1 according to an embodiment of the present disclosure has two electrode terminals on a bottom of a cylindrical battery housing 20 having an opening at one side (the lower side in the drawing) and the bottom at the other side (the upper side in the drawing).

The bottom of the battery housing 20 may be processed before inserting an electrode assembly 10 that is received in the battery housing 20. The bottom of the battery housing 20 may be integrally formed with the sidewall by metal sheet drawing using a press. The bottom may be formed with a flat profile.

The battery housing 20 may have a through-hole in the bottom (the upper side in the drawing). The through-hole may be disposed at the approximate center of the bottom. The center of the bottom may be concentric with the center of the through-hole. An electrode terminal 40 may be inserted and fixed to the through-hole.

The electrode terminal 40 includes a terminal exposure portion 41 exposed outwards through the bottom, and a terminal insertion portion 42 connected to the terminal exposure portion 41 and inserted into the battery housing 20 through the through-hole.

An insulation gasket 50 is interposed between the electrode terminal 40 and the component that forms the bottom of the battery housing 20. Accordingly, a gap between the electrode terminal 40 and the battery housing 20 is sealed, and the electrode terminal 40 and the battery housing 20 are electrically insulated from each other.

The bottom of the battery housing 20 itself may be a first electrode terminal having a polarity. Additionally, the electrode terminal 40 may be a second electrode terminal having a contrary polarity.

The electrode terminal 40 may be exposed outwards through the bottom of the battery housing 20. When the electrode terminal 40 is fixedly installed at the through-hole in the bottom, both the two electrode terminals may be positioned on the bottom of the battery housing 20.

The two electrode terminals that are positioned on the bottom may be processed before receiving the electrode assembly 10 in the battery housing 20, thereby providing a high degree of freedom of processing. Both the two electrode terminals may have a surface that is easy and convenient for an external electrical connection component to connect to them.

The bottom of the battery housing 20 may be made flat by a straightforward process, and when the bottom acts as the first electrode terminal, it may be easy to perform a connection operation with an electrical connection component for connection.

The electrode terminal 40 may be also processed before inserting the electrode assembly 10, and thus it is possible to make the electrode terminal 40 flat by a straightforward process, making it easy to perform a connection operation with an electrical connection component for connection.

The terminal exposure portion 41 of the electrode terminal 40 may have a flange shape extended more outwards in the radial direction than the inner circumferential surface of the through-hole. Additionally, the terminal exposure portion 41 may be processed first when preparing the electrode terminal 40 component. Accordingly, the size and shape of the terminal exposure portion 41 of the electrode terminal 40 may be precisely determined in a straightforward manner.

In the mass production of the cylindrical battery 1, since the bottom of the battery housing 20 and the electrode terminal 40 installed at the bottom of the battery housing 20 are all processed and assembled before receiving the electrode assembly 10 in the battery housing 20, it is possible to minimize a difference between products in the area of the two electrode terminals on the bottom of the battery housing 20 in a straightforward manner.

In the present disclosure, when the two electrode terminals are already positioned on the bottom of the battery housing 20, the electrode assembly 10 may be inserted into the battery housing 20. Accordingly, the electrode assembly 10 may be received as close to the bottom of the battery housing 20 as possible or in close contact with the bottom of the battery housing 20. The present disclosure may provide a simple electrical connection structure between the electrode assembly 10 and the two electrode terminals on the bottom of the battery housing 20 having the two electrode terminals. This structure increases the energy density in the battery housing 20.

The electrode assembly 10 may have a first electrode tab 11 at one end and a second electrode tab 12 at the other end in the axial direction.

The first electrode tab 11 may face the bottom of the battery housing 20 and then the electrode assembly 10 may be inserted into the battery housing 20.

The first electrode tab 11 may be electrically connected to the terminal insertion portion 42 of the electrode terminal 40. Accordingly, the electrode terminal 40 may have a first polarity.

The first electrode tab 11 is connected to the electrode terminal 40 through a first current collector plate 60.

The second electrode tab 12 may face an opening end of the battery housing 20. The second electrode tab 12 may be electrically connected to the battery housing 20 through the inner surface of the battery housing 20. Accordingly, the bottom of the battery housing 20 surrounding the electrode terminal 40 may have a second polarity.

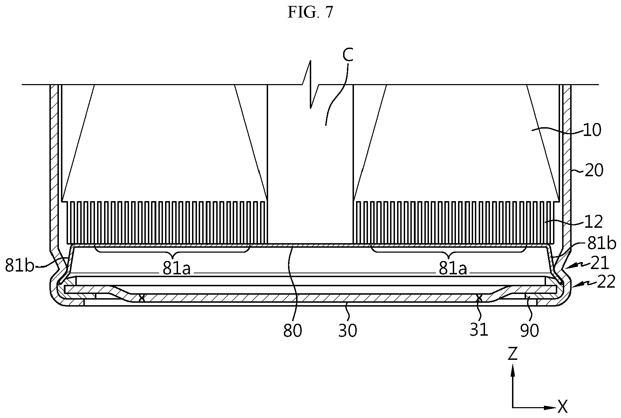

Since the battery 1 of the present disclosure has the two electrode terminals on the bottom of the cylindrical battery housing 20, it is possible to close the opening end of the cylindrical battery housing 20 in a straightforward manner as shown in FIG. 7.

The opening end of the battery housing 20 may be closed by a cap plate 30, and the cap plate 30 may be polar or non-polar.

To sum, the cylindrical battery 1 of an embodiment may include the cylindrical battery housing 20 having an opening at one side and the bottom at the other side; the electrode assembly 10 received in the battery housing 20 and having the first electrode tab 11 and the second electrode tab 12; the electrode terminal 40 fixed to the bottom of the battery housing 20 through the through-hole in the bottom of the battery housing 20; and the cap plate 30 which covers the opening end of the battery housing 20.

In other words, the cylindrical battery 1 of an embodiment may include the cylindrical battery housing 20 having an opening at one side and the bottom at the other side; the electrode terminal 40 fixed to the bottom of the battery housing 20 through the through-hole in the bottom of the battery housing 20; the electrode assembly 10 having the first electrode tab 11 and the second electrode tab 12, and received in the battery housing 20 through the opening at one side of the battery housing 20 such that the first electrode tab 11 faces the bottom of the battery housing 20 and the electrode terminal 40; and the cap plate 30 which covers the opening end of the battery housing 20 with the electrode assembly 10 received in the battery housing 20.

Here, the sidewall and the bottom of the battery housing 20 may be combined into one component before receiving the electrode assembly 10. The sidewall and the bottom of the battery housing 20 may be combined into one component in any manner before receiving the electrode assembly 10. That is, the sidewall and the bottom of the battery housing 20 may be manufactured as one component from the beginning through a forming process, for example, a drawing process using a metal sheet press, or each of the sidewall and the bottom may be manufactured as each component and then assembled into one component before receiving the electrode assembly 10. The component that forms the sidewall and the component that forms the bottom may be coupled to each other through welding.

The first electrode tab 11 may be electrically connected to the electrode terminal 40, and the second electrode tab 12 may be electrically connected to the battery housing 20. In contrast, the cap plate 30 may not be electrically connected to the first electrode tab 11 and the second electrode tab 12. The technical aspect of the present disclosure does not exclude the cap plate 30 electrically connected to the second electrode tab 12. That is, the cap plate 30 may be polar or non-polar. However, since the present disclosure has the two electrode terminals on the bottom of the battery housing 20, the cap plate 30 that covers the opening end opposite to the bottom may be non-polar. The non-polar cap plate 30 has many advantages.

The first electrode tab 11 may face the bottom, and the first electrode tab 11 may be electrically connected to the electrode terminal 40.

An insulator 70 may be interposed between the first electrode tab 11 and the bottom. Accordingly, the bottom of the battery housing 20 may be electrically insulated from the first electrode tab 11.

The insulator 70 may be interposed in close contact between the bottom of the battery housing 20 and the first electrode tab 11. Accordingly, it is possible to improve the contact between the first current collector plate 60 as described below and the first electrode tab 11.

The first current collector plate 60 is the component that electrically connects the first electrode tab 11 of the electrode assembly 10 to the electrode terminal 40. Referring to FISG. 3 and 4, one surface of the center of the first current collector plate 60 is in close contact with or joined to the electrode terminal 40, and the other surface of the first current collector plate 60 is in close contact with or joined to the first electrode tab 11. The joining may be made through welding. Accordingly, it is possible to minimize the resistance of the current flowing through the electrode terminal 40. Furthermore, the close contact structure increases the internal space utilization of the battery housing 20, thereby increasing the energy density.

The insulator 70 may not be interposed between a part of the electrode terminal 40 received in the battery housing 20 and the first electrode tab 11.

The insulator 70 has a hole that vertically passes therethrough, and the inner circumferential surface of the hole may be disposed around the fixed part of the electrode terminal 40.

The part of the electrode terminal 40 received in the battery housing 20 may face the insulator 70 in the radial direction and may not face the insulator 70 in the axial direction.

The outer diameter of the electrode terminal 40 exposed outwards through the bottom may be larger than the inner diameter of the through-hole in the bottom the battery housing 20. In other words, a first cross section of the through-hole in the bottom of the battery housing 20 may be included in a second cross section of the electrode terminal 40 exposed outwards through the bottom. The first and second cross sections are perpendicular to the axial direction. The meaning that the first cross section is included in the second cross section is that when the first cross section is projected onto the second cross section, the projected area of the first cross section is included in the area of the second cross section. Accordingly, the exposed part of the electrode terminal 40 through the bottom may cover at least part of the bottom of the battery housing 20 in the radial direction. Accordingly, it is possible to appropriately ensure the surface area of the bottom and the surface area of the electrode terminal 40.

The cylindrical battery 1 may be manufactured as follows.

First, the cylindrical battery housing 20 having an opening at one side and the bottom having the through-hole on the other side is prepared. Thereafter, the electrode terminal 40 is fixed to the through-hole. When fixing the electrode terminal 40 to the through-hole, the insulation gasket 50 may be interposed in close contact between the electrode terminal 40 and the through-hole in the bottom of the battery housing 20.

Subsequently, the electrode assembly 10 having the first electrode tab 11 and the second electrode tab 12 at two ends respectively is prepared.

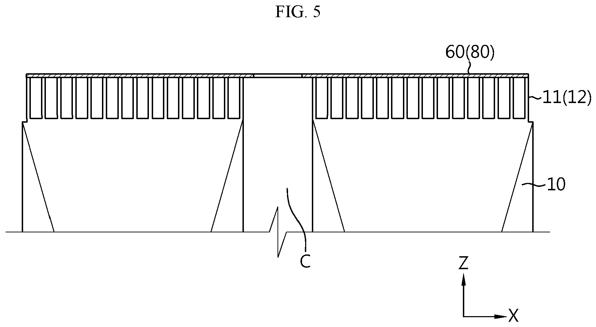

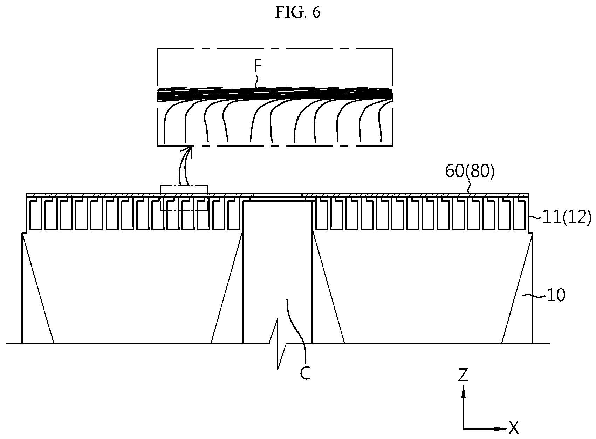

Before inserting the electrode assembly 10 into the battery housing 20, the first current collector plate 60 may be stacked on the first electrode tab 11 in the axial direction. As shown in FIG. 6, the first electrode tab 11 may be bent in the radial direction, and the first current collector plate 60 may be joined to the bent first electrode tab 11 by welding. To make it easy to bend the first electrode tab 11, cutout grooves may be formed at a predetermined interval along the winding direction in an uncoated portion that forms the first electrode tab 11. The direction in which the cutout grooves are extended may be the axial direction of the electrode assembly 10. As shown in FIG. 5, the first current collector plate 60 may be stacked without bending the first electrode tab 11.

Subsequently, the electrode assembly 10 is inserted through the opening end at the one side in the axial direction of the battery housing 20 with the electrode terminal 40 fixed to the bottom. In this instance, the electrode assembly 10 is inserted such that the first electrode tab 11 of the electrode assembly 10 faces the bottom. Further, the insulator 70 may be interposed between the first electrode tab 11 and the first current collector plate 60, and the inner surface of the bottom of the battery housing 20.

Before inserting the electrode assembly 10, the insulator 70 may be installed on the inner surface of the bottom of the battery housing 20. Alternatively, the insulator 70 may be attached to the end of the electrode assembly 10 to which the first current collector plate 60 is joined. An adhesive or an adhesive tape may be used to attach the insulator 70. When the insulator 70 is made of a heat shrinkable polymer resin, the insulator 70 may be fixed to the end of the electrode assembly 10 by heating. The insulator 70 may include a sleeve structure extended in the axial direction along the outer circumferential surface of the electrode assembly 10 to cover the top of the outer circumferential surface of the electrode assembly 10.

After the electrode assembly 10 is inserted into the battery housing 20, the first electrode tab 11 is electrically connected to the electrode terminal 40, and the second electrode tab 12 is electrically connected to the battery housing 20.

The electrode terminal 40 may be aligned with a hollow at a winding center C of the electrode assembly 10. Accordingly, the terminal insertion portion 42 of the electrode terminal 40 and the center of the first current collector plate 60 may be joined by inserting a welding device through the opening end of the battery housing 20 and the hollow of the electrode assembly 10. Since the terminal insertion portion 42 of the electrode terminal 40 has a flat bottom, the terminal insertion portion 42 of the electrode terminal 40 and the center of the first current collector plate 60 may be welded in close contact with each other. When the first current collector plate is joined to the terminal insertion portion 42 of the electrode terminal 40 by laser welding, a laser beam may be irradiated through the hollow of the electrode assembly 10. In this case, it may not be necessary to insert the welding device into the hollow.

A second current collector plate 80 may be joined to the second electrode tab 12, and the edge of the second current collector plate 80 may be connected to the inner surface of the battery housing 20. As shown in FIGS. 5 and 6, the second current collector plate 80 may be joined to the second electrode tab 12 in a state that the second electrode tab 12 may or may not be bent in the radial direction. To make it easy to bend the second electrode tab 12, cutout grooves may be formed at a predetermined interval along the winding direction in an uncoated portion that forms the second electrode tab 12. The direction in which the cutout grooves are extended may be the axial direction of the electrode assembly 10.

As shown in FIGS. 5, 6 and 9, the second current collector plate 80 may have a hole at the center. The hole may be a passage for inserting the device for joining the first current collector plate 60 to the electrode terminal 40 or allowing the laser beam to pass through. That is, before inserting the electrode assembly 10 into the battery housing 20, the second current collector plate 80 may be joined to the second electrode tab 12. Alternatively, after inserting the electrode assembly 10 into the battery housing 20, the second current collector plate 80 may be joined to the second electrode tab 2.

Subsequently, the opening end of the battery housing 20 may be covered with the cap plate 30. In this instance, the cap plate 30 and the battery housing 20 may be insulated from each other by placing a sealing gasket 90 between the opening end of the battery housing 20 and the edge of the cap plate 30 and compressing the cap plate 30 by a crimping portion 22 of the battery housing 20 together with the sealing gasket 90.

Before inserting the electrode assembly 10 into the battery housing 20 and forming the crimping portion 22, a beading portion 21 may be formed to support the bottom edge of the electrode assembly 10 to prevent the electrode assembly 10 from slipping from the battery housing 20.

The edge of the second current collector plate 80 may be engaged with the beading portion 21. In particular, when the crimping portion 22 is formed with the edge of the second current collector plate 80 interposed between the beading portion 21 and the cap plate 30, the second current collector plate 80 may be in close contact with the battery housing 20. The sealing gasket 90 may be interposed between the cap plate 30 and the edge of the second current collector plate 80 to keep the cap plate 30 non-polar. In this case, the edge of the second current collector plate 80 may be fixed between the sealing gasket 90 and the inner circumferential surface of the beading portion 21.

Before covering the opening end of the battery housing 20 with the cap plate 30, at least part of the edge of the second current collector plate 80 may be welded to the inner circumferential surface of the beading portion 21. The welding surface of the beading portion 21 may be a lower surface on the basis of the outermost point of the beading portion 21.

Referring to FIGS. 1 to 3, the cylindrical battery 1 according to an embodiment of the present disclosure includes the electrode assembly 10, the battery housing 20, the cap plate 30 and the electrode terminal 40. In addition to the above-described components, the cylindrical battery 1 may further include the insulation gasket 50 and/or the first current collector plate 60 and/or the insulator 70 and/or the second current collector plate 80 and/or the sealing gasket 90.

The electrode assembly 10 includes a first electrode having the first polarity, a second electrode having the second polarity and a separator between the first electrode and the second electrode. The first electrode corresponds to a positive or negative electrode, and the second electrode corresponds to an electrode having the opposite polarity to the first electrode.

The electrode assembly 10 may have, for example, a jelly-roll shape.

The electrode assembly 10 may be made by winding a stack around the winding center C, the stack formed by stacking a first separator, a first electrode, a second separator and a second electrode at least once in a sequential order. The electrode assembly 10 may have a jelly-roll structure. The outermost winding turn of the separator may be disposed on the outer circumferential surface of the electrode assembly 10 for the insulation from the battery housing 20.

The first electrode includes a first electrode current collector and a first electrode active material coated on one or two surfaces of the first electrode current collector. The first electrode current collector has a first uncoated portion not coated with the first electrode active material at one end in the widthwise direction (parallel to the Z axis). The first uncoated portion is extended along the winding direction of the electrode assembly 10.

The first uncoated portion acts as the first electrode tab 11. The first electrode tab 11 is positioned at the upper part in the heightwise direction (parallel to the Z axis) of the electrode assembly 10 received in the battery housing 20.

The second electrode includes a second electrode current collector and a second electrode active material coated on one or two surfaces of the second electrode current collector. The second electrode current collector has a second uncoated portion not coated with the second electrode active material at the other end in the widthwise direction (parallel to the Z axis). The second uncoated portion is extended along the winding direction of the electrode assembly 10.

The second uncoated portion acts as the second electrode tab 12. The second electrode tab 12 is positioned at the lower part in the heightwise direction (parallel to the Z axis) of the electrode assembly 10 received in the battery housing 20.

The first electrode tab 11 and the second electrode tab 12 extend and protrude from the separator in opposite directions along the axial direction of the electrode assembly 10. Accordingly, each of the first uncoated portion of the first electrode and the second uncoated portion of the second electrode exposed through one side and the other side of the electrode assembly 10 respectively may be used as the electrode tab.

The first electrode tab 11 and the second electrode tab 12 have a spirally wound structure. The first uncoated portion and the second uncoated portion may have the plurality of cutout grooves at a predetermined interval along the winding direction of the electrode assembly 10. The plurality of cutout grooves is used to split the first uncoated portion and the second uncoated portion into a plurality of sections, making it easy to bend the uncoated portion.

In the present disclosure, the positive electrode active material coated on the positive electrode plate and the negative electrode active material coated on the negative electrode plate may include any type of active material known in the technical field.

In an example, the positive electrode active material may include an alkali metal compound represented by formula A[AₓM_{y]}O_{2+z} (A includes at least one of Li, Na or K; M includes at least one selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤2, -0.1 ≤ z ≤ 2; the stoichiometric coefficients x, y and z are selected to keep the compound electrically neutral).

In another example, the positive electrode active material may be an alkali metal compound xLiM¹O₂-(1-x)Li₂M²O₃ (M¹ includes at least one element having an average trivalent oxidation state; M² includes at least one element having an average tetravalent oxidation state; 0≤x≤1) disclosed by US6,677,082 and US6,680,143.

In still another example, the positive electrode active material may be lithium metal phosphate represented by formula LiₐM¹ₓFe₁₋ₓM²_{y}P_{1-y}M³_{z}O_{4-z} (M¹ includes at least one selected from Ti, Si, Mn, Co, Fe, V, Cr, Mo, Ni, Nd, Al, Mg and Al; M² includes at least one selected from Ti, Si, Mn, Co, Fe, V, Cr, Mo, Ni, Nd, Al, Mg, Al, As, Sb, Si, Ge, V and S; M³ includes a halogen group element optionally containing F; 0 < a ≤2, 0 ≤ x ≤ 1, 0 ≤ y < 1, 0 ≤ z < 1; the stoichiometric coefficients a, x, y and z are selected to keep the compound electrically neutral) or Li₃M₂(PO₄)₃ [M includes at least one selected from Ti, Si, Mn, Fe, Co, V, Cr, Mo, Ni, Al, Mg and Al].

Preferably, the positive electrode active material may include primary particles and/or secondary particles formed by agglomeration of the primary particles.

In an example, the negative electrode active material may include a carbon material, a lithium metal or a lithium metal compound, silicon or a silicon compound, tin or a tin compound. Metal oxide having the potential of less than 2V such as TiO₂ and SnO₂ may be used for the negative electrode active material. The carbon material may include a low crystalline carbon, a high crystalline carbon or the like.

The separator may include, for example, a porous polymer film made of a polyolefin-based polymer such as an ethylene homopolymer, a propylene homopolymer, an ethylene/butene copolymer, an ethylene/hexene copolymer and an ethylene/methacrylate copolymer, used singly or in stack. In another example, the separator may include a commonly used porous nonwoven fabric, for example, a nonwoven fabric made of high melting point glass fibers and polyethylene terephthalate fibers.

The separator may include a coating layer of inorganic particles on at least one surface. Additionally, the separator itself may be formed of a coating layer of inorganic particles. The particles that form the coating layer may be bonded with a binder such that there is interstitial volume between adjacent particles.

The inorganic particles may include inorganics having the dielectric constant of 5 or more. Non-limiting examples of the inorganic particles may include at least one material selected from the group consisting of Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), BaTiO₃, hafnia (HfO₂), SrTiO₃, TiO₂, Al₂O₃, ZrO₂, SnO₂, CeO₂, MgO, CaO, ZnO and Y₂O₃.

An electrolyte may be a salt having a structure of A⁺B⁻. Here, A⁺ includes an alkali metal cation such as Li⁺, Na⁺, K⁺ or a combination thereof. B⁻ includes at least one anion selected from the group consisting of F⁻, Cl⁻, Br⁻, I⁻, NO₃⁻, N(CN)₂⁻, BF₄⁻, ClO₄⁻, AlO4⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

The electrolyte may be used by dissolving in an organic solvent. The organic solvent may include at least one of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC) or γ-butyrolactone.

Referring to FIGS. 1 to 4, the battery housing 20 is an approximately cylindrical container having the opening end at a lower portion thereof, and for example, is made of a material having conductive properties such as metal. The material of the battery housing 20 may be, for example, steel, stainless steel and aluminum.

The side (an outer circumferential surface) and the upper surface of the battery housing 20 may be integrally formed. The upper surface (parallel to the X-Y plane) of the housing 20 may have an approximately flat shape. The bottom of the battery housing 20 opposite to the opening end forms a closed end. The battery housing 20 accommodates the electrode assembly 10 through the opening end at the lower portion and also accommodates the electrolyte. The closed end supports the electrode assembly inserted through the opening end.

The battery housing 20 is electrically connected to the electrode assembly 10. For example, the battery housing 20 is electrically connected to the second electrode tab 12 of the electrode assembly 10. In this case, the battery housing 20 has the same polarity as the second electrode tab 12.

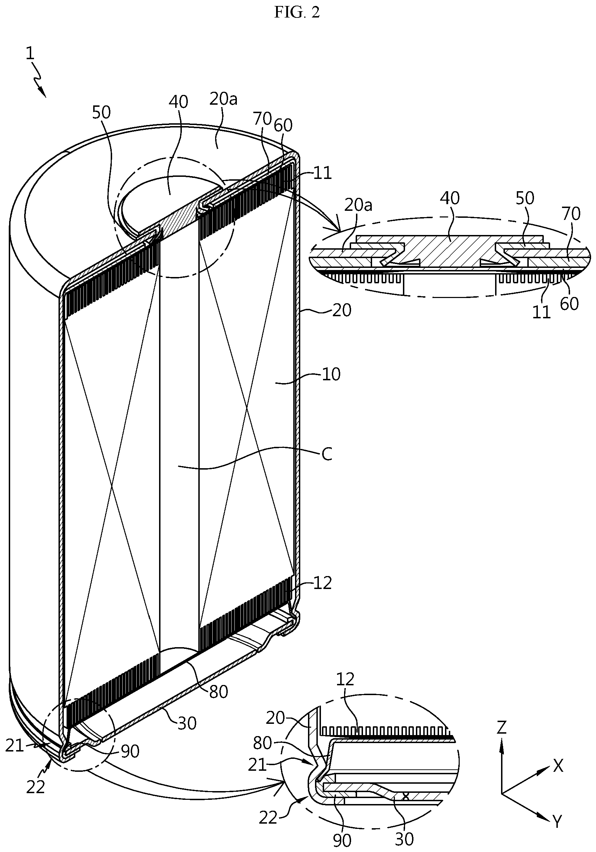

Referring to FIGS. 2 and 7, the battery housing 20 may include the beading portion 21 and the crimping portion 22 at the lower end. The beading portion 21 is disposed below the electrode assembly 10. The beading portion 21 is formed by pressing the outer circumferential surface of the battery housing 20 inward. The beading portion 21 may prevent the electrode assembly 10 having a size approximately corresponding to the internal space of the battery housing 20 from slipping through the opening end at the lower portion of the battery housing 20, and may act as a support on which the cap plate 30 and the edge of the second current collector plate 80 are seated.

The crimping portion 22 is disposed below the beading portion 21. The crimping portion 22 is extended and bent to surround the outer circumferential surface of the cap plate 30 below the beading portion 21 and part of the lower surface of the cap plate 30.

However, the present disclosure does not exclude that the battery housing 20 does not include the beading portion 21 and/or the crimping portion 22. In the present disclosure, when the battery housing 20 does not include the beading portion 21 and/or the crimping portion 22, the fixing of the electrode assembly 10 and/or the fixing of the cap plate 30 and/or the sealing of the battery housing 20 may be, for example, accomplished through additional application of a component that may act as a stopper for the electrode assembly 10 and/or additional application of a structure on which the cap plate 30 may be seated and/or welding between the battery housing 20 and the cap plate 30.

The region that forms the bottom of the battery housing 20 may have the thickness ranging from approximately 0.5 mm to 1.0 mm, and more preferably from approximately 0.6 mm to 0.8 mm. The sidewall of the battery housing 20 that forms the outer circumferential surface may have the thickness ranging from approximately 0.3 mm to 0.8 mm, and more preferably from approximately 0.40 mm to 0.60 mm. According to an embodiment of the present disclosure, the battery housing 20 may have a plating layer. In this case, the plating layer may include, for example, nickel (Ni). The thickness of the plating layer may range from approximately 1.5 µm to 6.0 µm.

As the thickness of the battery housing 20 is smaller, the internal space is larger, and accordingly it is possible to manufacture the cylindrical battery 1 with the improved energy density and high capacity.

On the contrary, with the increasing thickness, it is possible to prevent the propagation of flames to the adjacent battery in an explosion accident, thereby improving the safety.

As the thickness of the plating layer is smaller, it is more susceptible to corrosion, and as the thickness of the plating layer is larger, the manufacturing process complexity may increase or there is a higher likelihood that plating delamination may occur. Taking these conditions into account, it is necessary to set the optimum thickness of the battery housing 20 and the optimum thickness of the plating layer. Moreover, taking all the conditions into account, it is necessary to control each of the thickness of the bottom of the battery housing 20 and the thickness of the sidewall.

Referring to FIGS. 2 and 7, the cap plate 30 may be made of, for example, a metal to ensure the strength. The cap plate 30 covers the opening end at the lower portion of the battery housing 20. That is, the cap plate 30 forms the lower surface of the cylindrical battery 1. In the cylindrical battery 1 of the present disclosure, the cap plate 30 is non-polar even when it is made of a metal having conductive properties. Non-polarity may represent that the cap plate 30 is electrically insulated from the battery housing 20 and the electrode terminal 40. Accordingly, the cap plate 30 does not act as the positive or negative terminal. As such, the cap plate 30 does not need to be electrically connected to the electrode assembly 10 and the battery housing 20, and the material thereof does not need to be the conductive metal.

When the battery housing 20 of the present disclosure includes the beading portion 21, the cap plate 30 may be seated on the beading portion 21 of the battery housing 20. Additionally, when the battery housing 20 of the present disclosure includes the crimping portion 22, the cap plate 30 is fixed by the crimping portion 22. The sealing gasket 90 may be interposed between the cap plate 30 and the crimping portion 22 of the battery housing 20 to ensure sealability of the battery housing 20.

Meanwhile, as described above, the battery housing 20 of the present disclosure may not include the beading portion 21 and/or the crimping portion 22, and in this case, the sealing gasket 90 may be interposed between the cap plate 30 and the structure for fixing the cap plate 30 at the opening end of the battery housing 20 to ensure sealability of the battery housing 20.

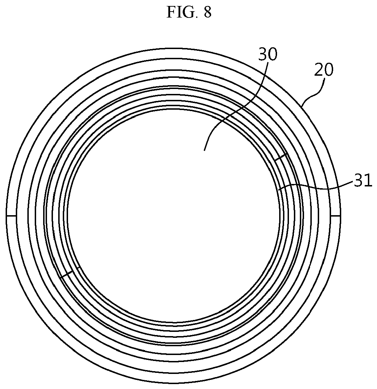

Referring to FIGS. 7 and 8, the cap plate 30 may further include a venting portion 31 to prevent the internal pressure from rising above a preset pressure due to gas generated in the battery housing 20. The venting portion 31 corresponds to an area having a smaller thickness than the other areas in the cap plate 30. The venting portion 31 is structurally weaker than any other area. Accordingly, when the internal pressure of the battery housing 20 rises above the predetermined level due to abnormality in the cylindrical battery 1, the venting portion 31 ruptures to force the gas generated in the battery housing 20 out. For example, the venting portion 31 may be formed by notching on any one or two surfaces of the cap plate 30 to partially reduce the thickness of the cap plate 30.

The cylindrical battery 1 according to an embodiment of the present disclosure has a structure in which both the positive and negative terminals exist at the upper part, so the upper part structure is more complicated than the lower part structure. Accordingly, for smooth venting of gas generated in the battery housing 20, the venting portion 31 may be formed in the cap plate 30 that forms the lower surface of the cylindrical battery 1. As shown in FIG. 7, the lower end of the cap plate 30 is preferably disposed higher than the lower end of the battery housing 20. In this case, even when the lower end of the battery housing 20 contacts the ground or the bottom surface of the housing for forming a module or a pack, the cap plate 30 does not contact the ground or the bottom surface of the housing for forming a module or a pack. Accordingly, it is possible to prevent a phenomenon in which the pressure required for the rupture of the venting portion 31 is different from the design pressure due to the weight of the cylindrical battery 1, thereby allowing for smooth rupture of the venting portion 31.

Meanwhile, when the venting portion 31 has a closed loop shape as shown in FIGS. 7 and 8, as the distance from the center of the cap plate 30 to the venting portion 31 is longer, the venting portion 31 may rupture more easily. When the same venting pressure is applied, as the distance from the center of the cap plate 30 to the venting portion 31 is longer, a larger force acts on the venting portion 31 and the venting portion 31 ruptures more easily. Additionally, as the distance from the center of the cap plate 30 to the venting portion 31 is longer, it is possible to achieve more smooth discharge of venting gas. From this perspective, the venting portion 31 may be preferably formed along the edge of the approximately flat area extended downwards (in a downward direction on the basis of FIG. 7) from the edge area of the cap plate 30.

Although FIG. 8 shows the venting portion 31 continuously formed in an approximately circular shape on the cap plate 30, the present disclosure is not limited thereto. The venting portion 31 may be discontinuously formed in an approximately circular shape on the cap plate 30, and may be formed in approximately a straight line or any other shape.

Referring to FIGS. 1 to 3, the electrode terminal 40 is made of a metal having conductive properties, and passes through the upper surface of the battery housing 20 opposite to the opening end of the battery housing 20 (parallel to the X-Y plane). For example, the electrode terminal 40 is electrically connected to the first electrode tab 11 of the electrode assembly 10. In this case, the electrode terminal 40 has the first polarity. Accordingly, in the cylindrical battery 1 of the present disclosure, the electrode terminal 40 may act as the first electrode terminal. When the electrode terminal 40 has the first polarity, the electrode terminal 40 is electrically insulated from the battery housing 20 having the second polarity. The electrical insulation between the electrode terminal 40 and the battery housing 20 may be accomplished in various manners. For example, the insulation may be accomplished by interposing the insulation gasket 50 between the electrode terminal 40 and the battery housing 20. In contrast, the insulation may be accomplished by forming an insulating coating layer in a part of the electrode terminal 40. Alternatively, the electrode terminal 40 may be structurally firmly fixed to prevent the contact between the electrode terminal 40 and the battery housing 20. Alternatively, two or more of the above-described methods may be applied together.

The electrode terminal 40 includes the terminal exposure portion 41 and the terminal insertion portion 42. The terminal exposure portion 41 is exposed outwards through the battery housing 20. The terminal exposure portion 41 may be disposed at the approximate center of the upper surface of the battery housing 20. The maximum width of the terminal exposure portion 41 may be larger than the maximum width of the through-hole of the battery housing 20. The terminal insertion portion 42 may be electrically connected to the first electrode tab 11 through the approximate center of the upper surface of the battery housing 20. The end edge of the terminal insertion portion 42 may be bent toward the inner surface of the battery housing 20 through plastic working and riveted to the inner surface. The plastic working is a technique that causes deformation by applying the pressure to the lower end of the electrode terminal 40 using a jig. By the plastic working, the end edge of the terminal insertion portion 42 is extended in the radial direction, so the diameter increases. The jig has a structure that conforms to the final shape of the terminal insertion portion 42. The plastic working is the metal processing technique using ductility and malleability of metal. The plastic working may be caulking. During the plastic working, applying the pressure using the jig may be performed multiple times. The bent part of the terminal insertion portion 42 toward the inner surface may compress the insulation gasket 50 onto the inner surface, thereby providing sealability between the electrode terminal 40 and the battery housing 20. Since the end edge of the terminal insertion portion 42 is bent toward the inner surface of the battery housing 20, the maximum width of the end portion of the terminal insertion portion 42 is larger than the maximum width of the through-hole of the battery housing 20.

Meanwhile, when the cylindrical battery 1 of the present disclosure includes the first current collector plate 60, the central area of the terminal insertion portion 42 may be coupled to the first current collector plate 60. The central area of the terminal insertion portion 42 may have, for example, an approximately cylindrical shape. The diameter of the bottom surface of the central area of the terminal insertion portion 42 may be set to approximately 6.2 mm.

The coupling between the bottom surface of the central area of the terminal insertion portion 42 and the first current collector plate 60 may be accomplished, for example, by laser welding or ultrasonic welding.

The laser welding may be performed by forming a laser welding line on one surface of the first current collector plate 60 by laser irradiation through the hollow at the winding center C of the electrode assembly 10. The laser welding line may be formed in the shape of an approximately concentric circle with the bottom surface of the central area of the terminal insertion portion 42 on one surface of the first current collector plate 60. The welding line may be continuous or partially discontinuous.

The diameter of the welding line having the concentric circle shape may be approximately 60% to 80% of the diameter of the bottom surface of the central area of the terminal insertion portion 42. For example, when the diameter of the bottom surface of the central area of the terminal insertion portion 42 is approximately 6.2 mm, the diameter of the circle drawn by the welding line may be preferably approximately 4.0 mm or more. When the diameter of the circle drawn by the welding line is too small, the bonding strength by the welding may be insufficient. On the contrary, when the diameter of the circle drawn by the welding line is too large, there may be a higher risk of damage of the electrode assembly 10 by heat and/or welding spatter.

The ultrasonic welding may be performed by inserting a welding rod for ultrasonic welding through the hollow at the winding center C of the electrode assembly 10. A welding part formed by the ultrasonic welding is formed in the contact interface between the bottom surface of the central area of the terminal insertion portion 42 and the first current collector plate 60. The welding part formed by the ultrasonic welding may be formed over the entire concentric circle having the diameter of approximately 30% to 80% of the bottom surface of the central area of the terminal insertion portion 42. For example, when the diameter of the bottom surface of the central area of the terminal insertion portion 42 is approximately 6.2 mm, the diameter of the circle occupied by the welding part by the ultrasonic welding may be preferably approximately 2.0 mm or more. When the diameter of the circle occupied by the welding part by the ultrasonic welding is too small, the bonding strength by the welding may be insufficient. On the contrary, when the diameter of the circle occupied by the welding part by the ultrasonic welding is too large, there may be a higher risk of damage of the electrode assembly 10 by heat and/or vibration.

In an embodiment of the present disclosure, the upper surface of the battery housing 20 and the electrode terminal 40 exposed outwards through the battery housing 20 have the opposite polarities and face the same direction. Additionally, there may be a step between the electrode terminal 40 and the upper surface of the battery housing 20. Specifically, when the entire upper surface of the battery housing 20 is flat or protrudes at the center, the terminal exposure portion 41 of the electrode terminal 40 may be extended above the upper surface of the battery housing 20. On the contrary, when the upper surface of the battery housing 20 is concavely recessed downwards from the center portion, i.e., towards the electrode assembly 10, the upper surface of the battery housing 20 may be protruded above the terminal exposure portion 41 of the electrode terminal 40.

Meanwhile, when the upper surface of the battery housing 20 is concavely recessed downwards from the center portion, i.e., towards the electrode assembly 10, the upper surface of the battery housing 20 and the upper surface of the terminal exposure portion 41 may form substantially the same plane according to the recessed depth and the thickness of the terminal exposure portion 41 of the electrode terminal 40. In this case, there may be no step between the upper surface of the battery housing 20 and the terminal exposure portion 41.

The insulation gasket 50 is interposed between the battery housing 20 and the electrode terminal 40 to prevent the contact between the battery housing 20 and the electrode terminal 40 having the opposite polarities.

Accordingly, the upper surface 20a of the battery housing 20 having the approximately flat shape may act as the second electrode terminal of the cylindrical battery 1.

The insulation gasket 50 includes a gasket exposure portion 51 and a gasket insertion portion 52.

The gasket exposure portion 51 is interposed between the terminal exposure portion 41 of the electrode terminal 40 and the battery housing 20. The gasket insertion portion 52 is interposed between the terminal insertion portion 42 of the electrode terminal 40 and the through-hole of the battery housing 20. The gasket insertion portion 52 may deform together during the plastic working of the terminal insertion portion 42 and come into close contact with the inner surface of the battery housing 20. The insulation gasket 50 may be made of, for example, a resin material having insulating properties.

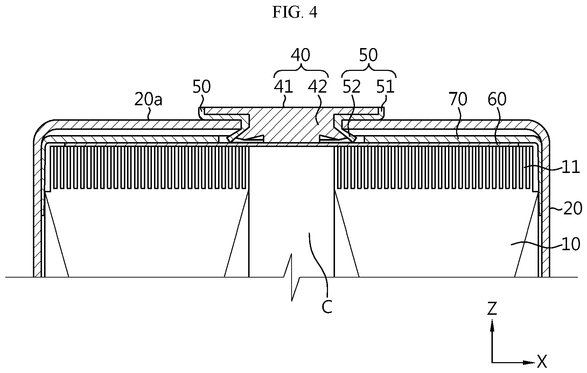

Referring to FIG. 4, the gasket exposure portion 51 of the insulation gasket 50 may be extended to cover the outer circumferential surface of the terminal exposure portion 41 of the electrode terminal 40.

When the insulation gasket 50 covers the outer circumferential surface of the electrode terminal 40, it is possible to prevent a short circuit from occurring in the process of coupling the electrical connection component such as the busbar to the upper surface of the battery housing 20 and/or the electrode terminal 40. Although not shown in the drawings, the gasket exposure portion 51 of the insulation gasket 50 may be extended to cover not only the outer circumferential surface of the terminal exposure portion 41 but also parts of the upper surface.

When the insulation gasket 50 is made of a resin material, the insulation gasket 50 may be coupled to the battery housing 20 and the electrode terminal 40 by heat fusion.

In this case, it is possible to enhance the sealability at the coupling interface between the insulation gasket 50 and the electrode terminal 40 and the coupling interface between the insulation gasket 50 and the battery housing 20. Meanwhile, when the gasket exposure portion 51 of the insulation gasket 50 is extended to the upper surface of the terminal exposure portion 41, the electrode terminal 40 may be coupled to the insulation gasket 50 by insert molding.

According to an embodiment of the present disclosure, the insulation gasket 50, the insulator 70 and the sealing gasket 90 may be made of the same material. However, it is not essential. The thickness of the insulation gasket 50 may be equal to the thickness of the insulator 70. However, it is not essential. Their thicknesses may be different, and in this instance, the thickness of the insulator 70 may be smaller than the thickness of the insulation gasket 50, and vice versa.

The entire remaining area except an area occupied by the electrode terminal 40 and the insulation gasket 50 on the upper surface of the battery housing 20 corresponds to the second electrode terminal 20a having the opposite polarity to the electrode terminal 40. In contrast, in the present disclosure, when the insulation gasket 50 is omitted and the electrode terminal 40 has an insulating coating layer in part, the entire remaining area except an area occupied by the electrode terminal 40 having the insulating coating layer on the upper surface of the battery housing 20 may act as the second electrode terminal 20a.

The cylindrical sidewall of the battery housing 20 may be formed as a one piece with the second electrode terminal 20a to avoid discontinuity between the sidewall of the battery housing 20 and the second electrode terminal 20a. The connection from the sidewall of the battery housing 20 to the second electrode terminal 20a may be a gently curved line. However, the present disclosure is not limited thereto, and the connection part may include at least one corner having a predetermined angle.

Referring to FIGS. 2 to 4, the first current collector plate 60 is coupled the upper part of the electrode assembly 10. The first current collector plate 60 is made of a metal having conductive properties, and is connected to the first electrode tab 11. Although not shown in the drawings, the first current collector plate 60 may have a plurality of protrusions arranged radially on the lower surface. The protrusions may be pushed into the first electrode tab 11 by pressing the first current collector plate 60.

Referring to FIG. 5, the first current collector plate 60 may be coupled to the end of the first electrode tab 11. The coupling between the first electrode tab 11 and the first current collector plate 60 may be made by, for example, laser welding. The laser welding may be performed by partially melting the base material of the first current collector plate 60 and may be performed with solders for welding interposed between the first current collector plate 60 and the first electrode tab 11. In this case, preferably, the solders have a lower melting point than the first current collector plate 60 and the first electrode tab 11.

Referring to FIG. 6, the first current collector plate 60 may be coupled to a coupling surface formed by bending the end of the first electrode tab 11 in a direction parallel to the first current collector plate 60. The bending direction of the first electrode tab 11 may be, for example, a direction toward the winding center C of the electrode assembly 10. When the first electrode tab 11 is bent, the uncoated portion that forms the first electrode tab 11 may form a bent surface region. The bent surface region has a structure in which the uncoated portion is stacked in multiple layers along the axial direction of the electrode assembly 10. When the first electrode tab 11 is bent in this way, it is possible to reduce the space occupied by the first electrode tab 11, thereby improving the energy density. Additionally, it is possible to increase the coupling area between the first electrode tab 11 and the first current collector plate 60, leading to the improved bonding strength and the reduced resistance.

Referring to FIGS. 2 to 4, the insulator 70 is disposed between the upper end of the electrode assembly 10 and the inner surface of the battery housing 20 or between the first current collector plate 60 coupled on the electrode assembly 10 and the inner surface of the battery housing 20. The insulator 70 prevents the contact between the first electrode tab 11 and the battery housing 20 and/or between the first current collector plate 60 and the battery housing 20. The insulator 70 may be interposed between the upper end of the outer circumferential surface of the electrode assembly 10 and the inner surface of the battery housing 20. The first current collector plate 60 may be a plate that extends across the upper end of the electrode assembly 10. However, the present disclosure is not limited thereto, and the first current collector plate 60 may extend across the upper end of the electrode assembly 10 only in part.

When the cylindrical battery 1 according to an embodiment of the present disclosure includes the insulator 70, the terminal insertion portion 42 of the electrode terminal 40 is coupled to the first current collector plate 60 or the first electrode tab 11 through the insulator 70.

The insulator 70 may have a through-hole adjacent to the winding center C. The through-hole may bring the terminal insertion portion 42 of the electrode terminal 40 and the first current collector plate 60 into direct contact with each other.

In an embodiment of the present disclosure, the terminal insertion portion 42 may have a circular shape on the plane, but is not limited thereto. The terminal insertion portion 42 may selectively have a polygonal shape, a star shape and a shape having legs extended from the center.

Referring to FIGS. 2 and 7, the second current collector plate 80 is coupled below the electrode assembly 10. The second current collector plate 80 is made of a metal having conductive properties and is connected to the second electrode tab 12. Additionally, the second current collector plate 80 is electrically connected to the battery housing 20. The second current collector plate 80 may be fixed between the inner surface of the battery housing 20 and the sealing gasket 90 as shown in FIG. 7.

Alternatively, the second current collector plate 80 may be welded to the inner surface of the battery housing 20.

Although not shown in the drawings, the second current collector plate 80 may have a plurality of protrusions arranged radially on one surface. The protrusions may be pushed into the second electrode tab 12 by pressing the second current collector plate 80.

Referring to FIG. 5, the second current collector plate 80 is coupled to the end of the second electrode tab 12. The coupling between the second electrode tab 12 and the second current collector plate 80 may be made by, for example, laser welding. The laser welding may be performed by partially melting the base material of the second current collector plate 80, and may be performed with solders for welding interposed between the second current collector plate 80 and the second electrode tab 12.In this case, preferably, the solders have a lower melting point than the second current collector plate 80 and the second electrode tab 12.

Referring to FIG. 6, the second current collector plate 80 may be coupled to a coupling surface formed by bending the end of the second electrode tab 12 in a direction parallel to the second current collector plate 80. The bending direction of the second electrode tab 12 may be, for example, a direction toward the winding center C of the electrode assembly 10. When the second electrode tab 12 is bent, the uncoated portion that forms the second electrode tab 12 may form a bent surface region. The bent surface region has a structure in which the uncoated portion is stacked in multiple layers along the axial direction of the electrode assembly 10. When the second electrode tab 12 is bent in this way, it is possible to reduce the space occupied by the second electrode tab 12, thereby improving the energy density. Additionally, it is possible to increase the coupling area between the second electrode tab 12 and the second current collector plate 80, leading to the improved bonding strength and the reduced resistance.

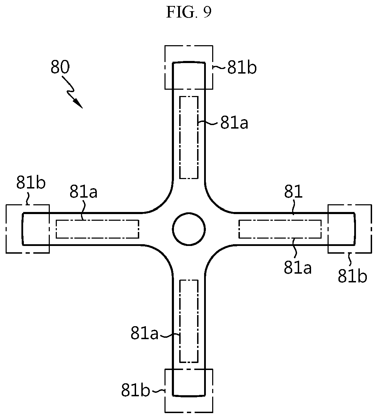

Referring to FIGS. 7 and 9, at least part 81a of the second current collector plate 80 may be coupled to the second electrode tab 12 through welding. Additionally, a predetermined area of the edge of the second current collector plate 80 may contact the inner surface of the beading portion 21. The predetermined area may be welded to the inner surface of the beading portion 21. An edge area 81b of the second current collector plate 80 adjacent to the predetermined area may be bent toward the inner surface of the beading portion 21 so that the predetermined area reaches the inner surface of the beading portion 21.

In an example, the second current collector plate 80 may include a plurality of sub-plates 81 radially extended from the center and spaced apart from each other. In this case, each of the plurality of sub-plates 81 is coupled to the second electrode tab 12 and the battery housing 20. The edge area 81b of the plurality of sub-plates 81 may be bent and extended toward a joining part with the battery housing 20.

When the second current collector plate 80 includes the plurality of sub-plates 81 spaced apart from each other, the second current collector plate 80 partially covers the lower surface of the electrode assembly 10. Accordingly, it is possible to ensure a sufficient space for the movement of gas generated from the electrode assembly 10 to the cap plate 30, and achieve smooth gas venting downward of the cylindrical battery 1. Meanwhile, the structure of the second current collector plate 80 including the plurality of sub-plates 81 as described above may be applied to the first current collector plate 60 described previously in the same manner.

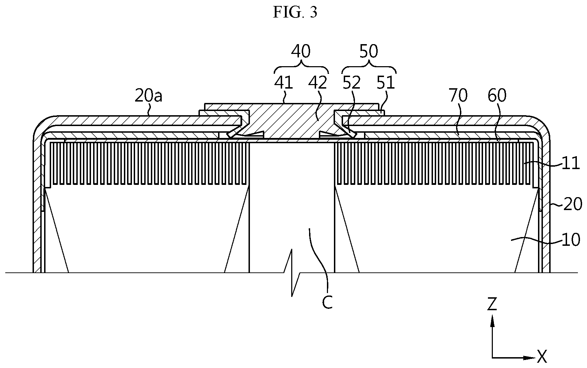

Referring to FIGS. 3 and 7, the cylindrical battery 1 according to an embodiment of the present disclosure includes the electrode terminal 40 having the first polarity and the second electrode terminal 20a having the second polarity electrically insulated from the electrode terminal 40 on one side in the axial direction. That is, since the cylindrical battery 1 according to an embodiment of the present disclosure includes a pair of electrode terminals 30, 20a in the same direction, in electrically connecting a plurality of cylindrical batteries 1, it is possible to place the electrical connection component such as the busbar on only one side of the cylindrical battery 1. This may lead to a simple battery pack structure and improved energy density.

Additionally, since the cylindrical battery 1 has a structure in which one surface of the battery housing 20 having an approximately flat shape may be used as the second electrode terminal 20a, it is possible to ensure a sufficient joining area in the joining of the electrical connection component such as the busbar to the second electrode terminal 20a. Accordingly, the cylindrical battery 1 may have a sufficient bonding strength between the electrical connection component and the second electrode terminal 20a and a reduction in resistance at the joined part to a desirable level.

Referring to FIG. 1, the busbar B is connected to each of the first electrode terminal 40 and the second electrode terminal 20a of the cylindrical battery 1 of the present disclosure. In each of the first electrode terminal 40 and the second electrode terminal 20a, to ensure a sufficient area for the connection of the busbar B, the exposed area of the first electrode terminal 40 through the battery housing 20, i.e., the width D1 of the upper surface of the terminal exposure portion 41 may be set to approximately 10% to 60% of the second electrode terminal 20a, i.e., the width D2 of the upper surface of the battery housing 20.

Preferably, the cylindrical battery may be, for example, a cylindrical battery having a ratio of form factor (a value obtained by dividing the diameter of the cylindrical battery by its height, i.e., defined as a ratio of diameter Φ to height H) larger than approximately 0.4.

Here, the form factor refers to a value indicating the diameter and height of the cylindrical battery. The cylindrical battery according to an embodiment of the present disclosure may be, for example, 46110 battery, 4875 battery, 48110 battery, 4880 battery and 4680 battery. In the numbers indicating the form factor, the former two numbers indicate the diameter of the battery, and the remaining numbers indicate the height of the battery.

The battery according to an embodiment of the present disclosure may be a battery having an approximately cylindrical shape with the diameter of approximately 46 mm, the height of approximately 110 mm and the ratio of form factor of 0.418.

The battery according to another embodiment may be a battery having an approximately cylindrical shape with the diameter of approximately 48 mm, the height of approximately 75 mm and the ratio of form factor of 0.640.

The battery according to another embodiment may be a battery having an approximately cylindrical shape with the diameter of approximately 48 mm, the height of approximately 110 mm and the ratio of form factor of 0.436.

The battery according to another embodiment may be a battery having an approximately cylindrical shape with the diameter of approximately 48 mm, the height of approximately 80 mm, and the ratio of form factor of 0.600.

The battery according to another embodiment may be a battery having an approximately cylindrical shape with the diameter of approximately 46 mm, the height of approximately 80 mm, and the ratio of form factor of 0.575.

Conventionally, batteries having the ratio of form factor of approximately 0.4 or less have been used. That is, for example, 1865 battery and 2170 battery have been used. The 1865 battery has the diameter of approximately 18 mm, the height of approximately 65 mm and the ratio of form factor of 0.277. The 2170 battery has the diameter of approximately 21 mm, the height of approximately 70 mm and the ratio of form factor of 0.300.

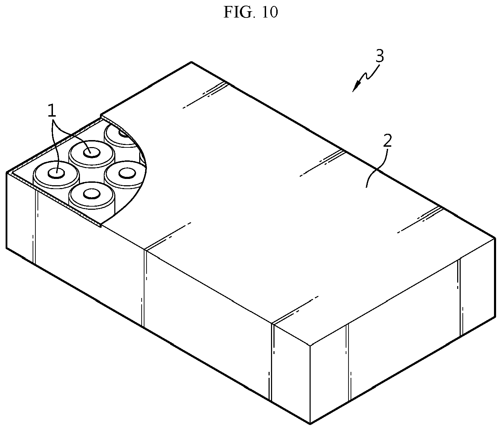

Referring to FIG. 10, a battery pack 3 according to an embodiment of the present disclosure includes a battery assembly including a plurality of cylindrical batteries 1 according to an embodiment of the present disclosure electrically connected to each other and a pack housing 2 accommodating the battery assembly. In the accompanying drawings, for convenience of illustration in the drawings, the components such as the busbar for electrical connection, a cooling unit and a power terminal are omitted.

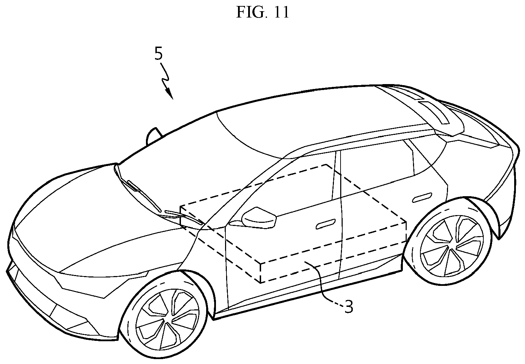

Referring to FIG. 11, a vehicle 5 according to an embodiment of the present disclosure may be, for example, an electric vehicle, a hybrid electric vehicle or a plugin hybrid electric vehicle, and includes the battery pack 3 according to an embodiment of the present disclosure. The vehicle 5 includes a four-wheeler and a two-wheeler. The vehicle 5 operates using the power supplied from the battery pack 3 according to an embodiment of the present disclosure.

It should be understood that the above-described embodiment is provided for illustrative purposes in all aspects, but not intended to be limiting, and the scope of the present disclosure will be defined by the appended claims rather than the foregoing detailed description. Additionally, it should be interpreted that the meaning and range of the appended claims as well as all modifications and changes made from the equivalent concept are included in the scope of the present disclosure.

Although the present disclosure has been hereinabove described with reference to the accompanying drawings, the present disclosure is not limited to the disclosed embodiments and the accompanying drawings, and it is obvious that a variety of modifications may be made thereto within the scope of the technical aspects of the present disclosure. Although the description of the embodiment of the present disclosure does not explicitly describe the effect by the operation of the element of the present disclosure, it is apparent that the predictable effect by the corresponding element should be acknowledged.

## Claims

1. A method of manufacturing a battery, comprising:
(a) preparing a battery housing having an opening at one side and a bottom having a through-hole at the other side;
(b) fixing an electrode terminal to the through-hole;
(c) preparing an electrode assembly including a first electrode tab formed of a first uncoated portion and a second electrode tab formed of a second uncoated portion at upper and lower parts, respectively;
(d) inserting the electrode assembly into the battery housing through the opening at one side of the battery housing such that the first electrode tab faces the bottom;
(e) electrically connecting the first electrode tab to the electrode terminal; and
(f) covering the opening end with a cap plate.

2. The method of manufacturing a battery according to claim 1, wherein the electrode terminal includes a terminal insertion portion inserted into the battery housing through the through-hole, and
the step (b) comprises:
(b1) placing an insulation gasket between the electrode terminal and the through-hole; and
(b2) performing plastic working on an end edge of the terminal insertion portion in a radial direction such that a diameter of the end edge is larger than a diameter of the through-hole.

3. The method of manufacturing a battery according to claim 2, wherein the step (b2) comprises applying pressure to the end edge along an axial direction of the electrode assembly using a jig having a structure that conforms to a final shape of the plastic working.

4. The method of manufacturing a battery according to claim 2, wherein the step (b2) comprises causing the plastically-worked end edge to compress the insulation gasket onto an inner surface of the bottom of the battery housing.

5. The method of manufacturing a battery according to claim 1, wherein the step (c) comprises:
preparing a first electrode having the first uncoated portion at a long side end and a second electrode having the second uncoated portion at the long side end;
forming a plurality of cutout grooves in the first uncoated portion and the second uncoated portion along a winding direction of the electrode assembly to split the first uncoated portion and the second uncoated portion into a plurality of sections;
disposing the first electrode and the second electrode such that the first uncoated portion is opposite to the second uncoated portion in the axial direction and winding the first electrode and the second electrode with a separator interposed therebetween around an axis to form the electrode assembly in which a core and a circumferential surface are defined; and
bending the first uncoated portion and the second uncoated portion along a radial direction of the electrode assembly to form a bent surface region having a structure in which the uncoated portion is stacked in multiple layers along the axial direction.

6. The method of manufacturing a battery according to claim 5, wherein the step (c) comprises coupling a first current collector plate to the bent surface region of the first uncoated portion, and
wherein the step (e) comprises coupling the electrode terminal to the first current collector plate to electrically connect the electrode terminal to the first electrode tab.

7. The method of manufacturing a battery according to claim 6, wherein the step (e) comprises welding the electrode terminal to the first current collector plate using a hollow at a core of the electrode assembly.

8. The method of manufacturing a battery according to claim 7, wherein the step (e) comprises irradiating a welding laser toward a welding area of the first current collector plate facing the electrode terminal through the hollow at the core of the electrode assembly.

9. The method of manufacturing a battery according to claim 6, further comprising:
placing an insulator between the first current collector plate and an inner surface of the bottom of the battery housing.

10. The method of manufacturing a battery according to claim 9, further comprising, before the step (d):
preparing the insulator having a through-hole at a center and a shape corresponding to the inner surface of the bottom of the battery housing; and
installing the insulator on the inner surface of the bottom of the battery housing such that the through-hole of the insulator surrounds a fixed part of the electrode terminal.

11. The method of manufacturing a battery according to claim 9, further comprising, before the step (d):
preparing the insulator having a through-hole at a center and a shape corresponding to the inner surface of the bottom of the battery housing; and
fixing the insulator onto the first current collector plate such that the through-hole of the insulator is disposed on the core of the electrode assembly.

12. The method of manufacturing a battery according to claim 1, further comprising:
coupling a second current collector plate to the second electrode tab of the electrode assembly; and
coupling at least part of the second current collector plate to an inner surface of the battery housing.

13. The method of manufacturing a battery according to claim 12, further comprising:
pressing an outer circumferential surface of the opening end of the battery housing inward of the battery housing to form a beading portion;
welding at least part of the second current collector plate to the second electrode tab; and
bringing a predetermined area of an edge of the second current collector plate into contact with an inner surface of the beading portion.

14. The method of manufacturing a battery according to claim 13, further comprising:
bending an edge area of the second current collector plate adjacent to the predetermined area such that the predetermined area reaches the inner surface of the beading portion.

15. The method of manufacturing a battery according to claim 13, further comprising:
welding the predetermined area to the inner surface of the beading portion.

16. The method of manufacturing a battery according to claim 13, further comprising:
placing a sealing gasket between an edge of the cap plate and the opening end of the battery housing; and
bending the opening end of the battery housing in a centripetal direction to form a crimping portion to fix the edge of the cap plate to the opening end together with the sealing gasket.

17. The method of manufacturing a battery according to claim 16, wherein the crimping portion compresses the sealing gasket to bring the predetermined area and the inner surface of the beading portion into close contact with each other.

18. The method of manufacturing a battery according to claim 1, further comprising:
forming a venting groove in at least one of two surfaces of the cap plate.

19. The method of manufacturing a battery according to claim 1, further comprising, before the step (f):
placing the battery housing upright such that the bottom of the battery housing faces a ground; and
injecting an electrolyte into the battery housing.

20. The method of manufacturing a battery according to claim 1, further comprising, after the step (f):
placing the battery housing upright such that the bottom of the battery housing faces upward; and
performing electrical wiring using an area except an exposed area of the electrode terminal through an outer surface of the bottom of the battery housing and the electrode terminal.
